## Europäisches Patentamt

## European Patent Office

## Office européen des brevets

(11) Publication number: **0 119 856**
**B1**

(12) **EUROPEAN PATENT SPECIFICATION**

(45) Date of publication of patent specification: **06.02.91**

(21) Application number: **84301824.3**

(22) Date of filing: **16.03.84**

(51) Int. Cl.⁵: **H 04 N 1/10, H 04 L 1/12, B 43 L 1/00**

(54) Electronic copy board.

(30) Priority: **18.03.83 JP 44283/83**
**18.03.83 JP 44284/83**

(43) Date of publication of application:
**26.09.84 Bulletin 84/39**

(45) Publication of the grant of the patent:
**06.02.91 Bulletin 91/06**

(84) Designated Contracting States:
**DE FR GB SE**

(56) References cited:
**EP-A-0 066 625**
**WO-A-83/04160**
**US-A-4 511 929**

**PATENT ABSTRACTS OF JAPAN, vol. 7, no. 27 (E-156)1172r, 3rd February 1983; & JP - A - 57 180 280**

(73) Proprietor: **Oki Electric Industry Company, Limited**
**7-12, Toranomon 1-chome Minato-ku Tokyo 105 (JP)**

(72) Inventor: **Takayama, Shoichiro Oki Electric Industry Co., Ltd. 7-12 Toranomon 1-chome Minato-ku Tokyo (JP)**
Inventor: **Suga, Yukio Oki Electric Industry Co., Ltd.**
**7-12 Toranomon 1-chome Minato-ku Tokyo (JP)**
Inventor: **Tadokoro, Joji Oki Electric Industry Co., Ltd.**
**7-12 Toranomon 1-chome Minato-ku Tokyo (JP)**
Inventor: **Takeda, Yukinori Oki Electric Industry Co., Ltd.**
**7-12 Toranomon 1-chome Minato-ku Tokyo (JP)**

(74) Representative: **Rackham, Stephen Neil et al GILL JENNINGS & EVERY 53-64 Chancery Lane London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a copy board which is the combination of a writing sheet, such as a blackboard, and a copying machine, whereby a pattern such as a string of characters, drawn on the writing sheet is automatically copied to provide a hard copy of that pattern.

Conventionally, blackboards are used at meetings attended by a number of people, and all of the participants at the meeting must take an individual memorandum in their own notebooks. Alternatively, a memorandum is written by a specific person and is then copied by using a conventional copying machine.

Accordingly, the conventional note-taking method suffers from a number of disadvantages, which are as follows:

a) Any person taking a memorandum can neither speak nor listen attentively when he is writing a memorandum.

b) The meeting must be slow, due to the taking of a memorandum.

c) Errors may occur in taking a memorandum.

d) There is a delay in providing copies of the memorandum, because the memorandum must be proof read.

US—A—451129 describes a system for overcoming this problem by using a video camera to provide picture information of the blackboard and then feed this information to a printer to provide a hard copy.

EP—A—0066625 describes a thermal copying machine which in the following respects is entirely conventional. It includes a lamp to illuminate an elongate portion of the material to be copied, an image sensor to provide an electrical signal in response to the pattern on the illuminated elongate portion of the material to be copied, and means to cause relative movement between the image sensor and the material to be copied.

According to the invention, an electronic copy board comprising a lamp for illuminating an elongate portion of material to be copied; an image sensor mounted relative to the material to be copied to provide an electrical signal in response to the pattern in the elongate portion which is illuminated by the lamp; and means to cause relative movement between the image sensor and the material to be copied for scanning the pattern on the material to be copied; is characterised in that it also includes writing sheet on which a pattern, such as a string of characters can be erasably written; and a printer for printing the scanned pattern at a reduced size in accordance with the electrical signal from the image sensor, in that the writing sheet is a flexible sheet which is movable by being placed in the nip of rotating rollers; and in that the image sensor is fixed.

Embodiments of the invention will now be described, by way of example, with reference to the accompanying drawings, wherein

Figure 1 shows an external pictorial view of a copy board in accordance with the invention,

Figure 2 shows a schematic view of major parts of the copy board of Figure 1,

Figure 3 and Figure 4 show the construction of modifications of the copy board of Figure 1,

Figure 5A is a block diagram of the electrical circuit of the copy board of Figure 1, and,

Figure 5B shows a timing diagram illustrating the operation of the circuit of Figure 5A, and

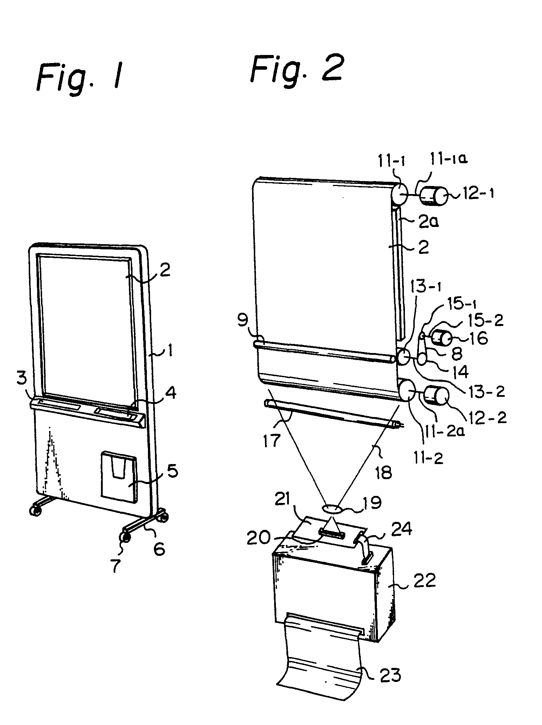

Figure 1 shows a pictorial view of a copy board according to the present invention, and Figure 2 shows parts of the copy board. The copy board comprises, externally, a housing 1, a flexible writing sheet 2, a receptacle 3 for receiving writing means, such as a felt-tipped pen, an operating panel 4, a hopper 5 for accepting a printed paper, and legs 6 with castors 7 mounted thereon. A cardboard backing sheet 2a is mounted behind the writing sheet 2 to provide a fixed rigid plane. A first drum 11—1 is rotatable by a motor 12—1 via a shaft 11—1a, for rolling the writing sheet upwards, and a second drum 11—2, parallel to the drum 11—1, is rotatable by a motor 12—2 via a shaft 11—2a to rewind the writing sheet. A pinch roller 13—1, for transferring the writing sheet 2 from one drum to the other with a constant predetermined speed is connected via a shaft 13—2 to a pulley 14. A roller 9 co-operates with the roller 13—1 for moving the sheet. A smaller pulley 15—1 is coupled to the pulley 14 via a belt 8, and is mounted on a shaft 15—2 which is rotated by a motor 16. An elongate linear light source 17, such as a fluorescent lamp, illuminates a region of the writing sheet so that a light beam 18 reflected therefrom passes through a lens 19 to an image sensor 20 for converting the optical pattern on the sheet 2 to an electrical signal. The image sensor is mounted on a circuit board 21. A printing apparatus 22, which operates, for instance, on the thermal printing principle, prints on a printing paper 23. A ribbon cable 24 interconnects the circuit board 21 and the printing apparatus 22.

The copy board of Figures 1 and 2 operates as follows.

Upon operation of the operation panel 4, the motors 12—1, 12—2 and 16 rotate so that the sheet 2 is transferred by the roller 13—1 and is wound on to the drum 11—2 from the drum 11—1. The speed of transferring the sheet 2 is determined by the motor 16. Therefore, a pattern written on the sheet 2 with a felt pen or other writing instrument moves downwards, and is illuminated by the fluorescent lamp 17 before the pattern is wound up by the drum 11—2.

The pattern on the sheet 2 is converted to an electrical signal by a scanning method. A scanning line illuminated by the lamp 17 is projected on the image sensor 20 through the lens 19. The main scanning of the pattern is effected by the image sensor 20, and sub-scanning of the pattern is accomplished by moving the sheet 2, so that the output signal of the image sensor 20 is synchronized with the speed of movement of the sheet 2. The output signal of the image sensor 20 is applied to the thermal printer 22 through the flat cable 24 and the circuit board 21. The printer 22 prints the pattern represented by the electrical signal on the paper 23. Hence, the visible pattern on the sheet 2 is first converted to an electrical signal by scanning, and the electrical signal causes that pattern to be printed on the paper.

The sheet 2 can also move in the reverse direction, i.e. it can be wound up by the drum 11—1. In that case, the pattern which was previously wound up by the drum 11—2 appears again on view, and any addition or correction to the pattern may then be effected. Then the sheet is wound up by the drum 11—2 and the pattern on the sheet 2 is printed on a paper 23 as described above.

The pattern can be erased from the sheet 2 when it has been printed. In that case, the pattern wound up by the drum 11—2 is reversed so that it again appears on the screen, and then the pattern can be erased by an eraser or a wiper.

If the sheet 2 is made of mylar film or fluorine film, the pattern can be erased from the sheet simply by friction. Erasing is also possible by illuminating the sheet with an ultra-violet beam if the pattern is written with an ink which is erased by ultra-violet light.

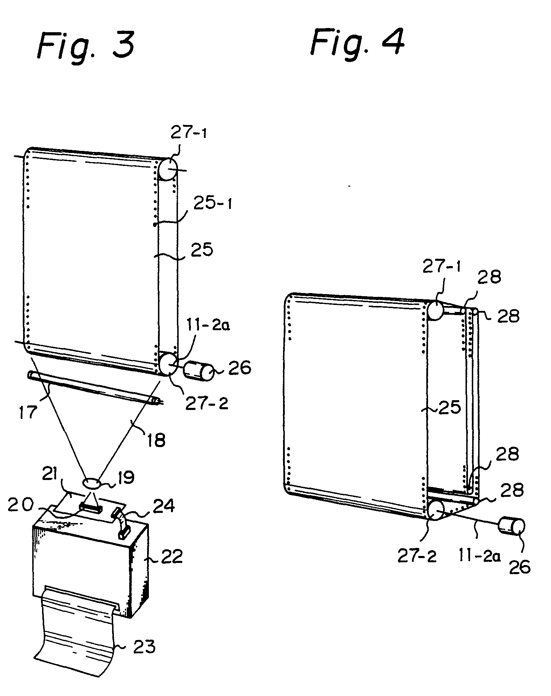

Figure 3 shows a modification of the above-described copy board. In this case, the sheet 25 is in the form of an endless loop and is provided with sprocket holes at one or both edges. The sheet 25 is mounted on drums 27—1 and 27—2, and the drum 27—2 is rotatable by a motor 26 via a shaft 11—2a. Other reference numerals in Figure 3 are the same as those in Figures 1 and 2. In operation, signals from the operation panel 4 cause the motor 26 to rotate the drum 27—2. The drum 27—2 has a sprocket at one or both ends to engage with the holes in the sheet 25, so that the sheet 25 does not slip.

Figure 4 shows another modified embodiment of the present invention, in which the length of an endless sheet 25 is longer than that of Figure 3. A plurality of rollers 28 is provided, and the endless sheet 25 runs round those rollers so that the total length of the endless sheet 25 can be large. In operation, the motor 26 moves the sheet 25 with a constant speed. The sheet 25 runs round the rollers 27—1 and 27—2 and the rollers 28. Otherwise the operation of the apparatus of Figure 4 is the same as that of Figures 1 and 2.

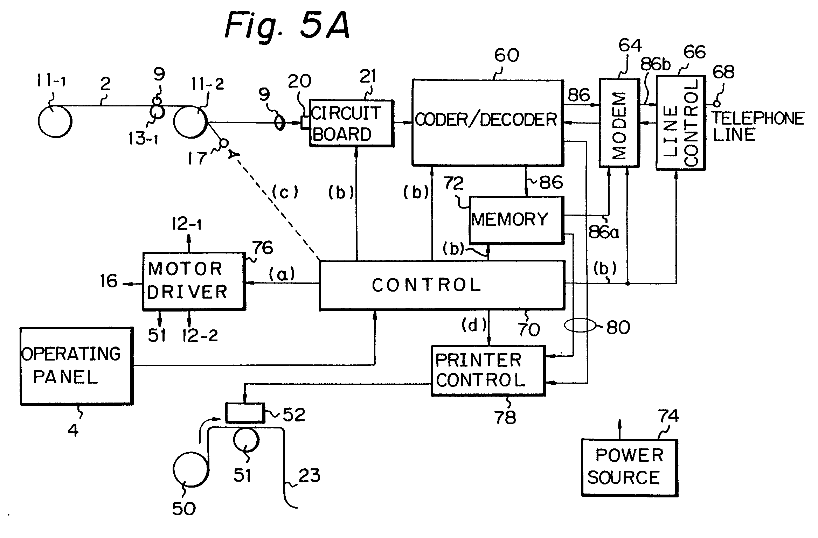

Figure 5a is a block diagram of an electrical circuit used in the apparatus of Figures 1 to 4, in which a communication facility and a memory are provided. The printing paper 23 is held on a roll 50, and a roller 51 is provided for pressing the paper 23 against a printing head 52. The printing head 52 is, for instance, a thermal head for printing on a thermal paper. A coder/decoder 60 is provided for encoding a picture signal and/or for decoding a signal from a telephone line to provide an analog picture signal. A line control circuit 66 is connected between a modem 64 and a terminal 68 which couples the apparatus to a telephone line. A control circuit 70 feeds control signals to each part of the apparatus. The apparatus further comprises a digital memory 72 for storing a picture signal, a power source 74 for feeding electrical power to each part of the apparatus, a motor driver 76 for supplying power to the motors, a printer control 78, picture data lines 80 and digital picture data lines 86, 86a and 86b. Other reference numerals are the same as those of Figures 1 and 2.

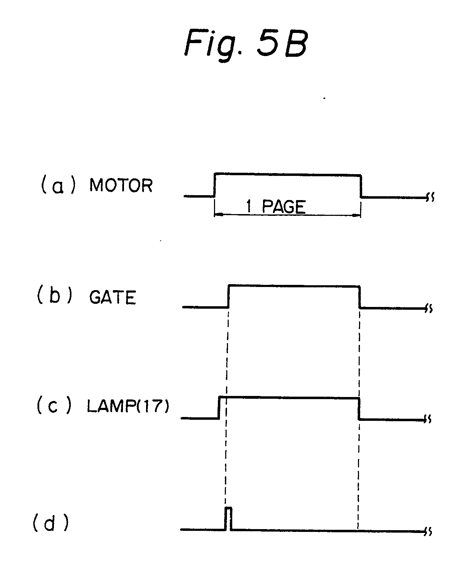

In operation, when the operating panel 4 sends a signal to the control circuit 70 the circuit triggers the motor driver 76 which energises each of the motors 12—1, 12—2, 16 and 51, so that these motors rotate to move the writing sheet which is assumed to have a pattern thereon. The motors rotate so that the sheet is moved by the equivalent of one page length (see Figure 5B(a)). After a short delay from the starting of the motors, the control 70 energises the fluorescent lamp 17 (see Figure 5B(c)), the lamp illuminates the sheet behind the screen and the image sensor 20 converts the visual pattern on a scanning line to an electrical signal. That signal is applied to the coder/decoder 60 which converts the picture signal to a digital form. The coder/decoder 60 feeds a digital signal over the lines 86 to the memory 72 and the modem 64, and a picture signal is fed over the line 80 to the printer control 78. The digital signal of the output of the coder/decoder 60 is transmitted to a telephone line through the modem 64 and the line control circuit 66. Similarly, when a signal is transmitted from a telephone line, the apparatus receives that signal and the coder/decoder 60 decodes the signal. The coder/decoder 60 applies the decoded picture signal to the print control circuit 72 over the line 80.

After a delay following the switching on of the lamp 17, (Figure 5B(c)), the control 70 feeds a gate signal (Figure 5B(b)), to the circuits 21, 60, 64 and 66, and a trigger pulse (Figure 5B(d)) to the printer control circuit 78. The printer control circuit 78 then feeds the picture signal to the printing head 52 and printing on the paper 23 is effected. Hence, the pattern written on the sheet 2 is copied on to the paper 23 due to the scanning by the image sensor 20.

Similarly, a picture signal fed from an external telephone line may also be printed on the paper 23, so that a pattern on a remote copy board can be printed on the paper by use of the telephone line.

The memory 72 stores the picture pattern information which is fed by the coder/decoder 60 through the line 86. The stored pattern is read out upon operation of the operating panel 4, and the read out signal is applied to the printer control 78 to cause printing on the paper 23. Alternatively, the read out signal may be forwarded to an external telephone line through the modem 64 and the line control 66, so that a remote copy board, similar to the present apparatus, may copy the pattern.

The image sensor 20 and its associated components could alternatively be mounted at the top of the sheet 2, so that the sheet moves upwards to effect scanning of the pattern.

Some of the advantages of the present copy board are enumerated as follows.

a) Writing of a memorandum on a meeting becomes unnecessary, so the participants can enter into a discussion without taking a memorandum.

b) No errors occur in taking a memorandum on a meeting.

c) The copy board can produce many pages of print which are provided by a drum.

d) As a printer is mounted in the copy board, a hard copy is provided quickly.

e) The characters or other pattern drawn on the sheet are erasable, so the sheet can be used repetitively.

f) The pattern can be transmitted to a remote terminal, where a hard copy can be made.

g) The pattern can be stored in a memory, which can then reproduce the pattern later.

## Claims

1. An electronic copy board comprising a lamp (17) for illuminating an elongate portion of material to be copied; an image sensor (20) mounted relative to the material to be copied to provide an electrical signal in response to the pattern in the elongate portion which is illuminated by the lamp; and means (11—16) to cause relative movement between the image sensor and the material to be copied for scanning the pattern on the material to be copied; characterised in that it also includes writing sheet (2) on which a pattern, such as a string of characters can be erasably written; and a printer (22) for printing the scanned pattern at a reduced size in accordance with the electrical signal from the image sensor, in that the writing sheet (2) is a flexible sheet which is movable by being placed in the nip of rotating rollers (9, 13—1); and in that the image sensor (20) is fixed.

2. A copy board according to claim 1, characterised in that the flexible sheet (2) is made of a plastics material.

3. A copy board according to claim 1 or claim 2, characterised by means to erase a pattern, written on the sheet (2) using an erasable ink, by illuminating the pattern with a light beam.

4. A copy board according to any one of the preceding claims; characterised by a rigid backing sheet (2a) mounted behind the flexible sheet (2).

5. A copy board according to any one of the preceding claims, characterised in that the flexible sheet (25) is in the form of an endless loop.

6. A copy board according to any preceding claim, characterised by means (64, 66, 68) for transmitting the electrical signal to a remote terminal over a telephone line.

7. A copy board according to any preceding claim, characterised by a digital memory (72) for storing the pattern so that subsequent printing can be effected by reading out the content of the memory and applying the read out signal to the printer (22).

8. A copy board according to any preceding claim, characterised by a light shield (127) between the lamp (125) and the image sensor (122) to prevent direct radiation of the image sensor by the lamp.

## Patentansprüche

1. Elektronische Kopiertafel mit einer Lampe (17) zum Beleuchten eines länglichen Bereichs des zu kopierenden Materials; einem relativ zu dem zu kopierenden Material angeordneten Bildfühler (20) zum Bereitstellen eines elektrischen Signals in Entsprechung des Musters auf dem länglichen Bereich, der durch die Lampe beleuchtet ist; und eine Vorrichtung (11—16) zum Erzeugen einer Relativ-bewegung zwischen dem Bildfühler und dem kopierenden Material zum Abtasten des Musters auf dem zu kopierenden Material, dadurch gekennzeichnet, daß sie zudem ein Schreibblatt (2) umfaßt, auf dem das Muster, wie etwa eine Abfolge von Zeichen löschbar geschrieben werden kann, sowie einen Drucker (22) zum Drucken des abgetasteten Musters in reduzierter Größe gemäß dem elektrischen Signal vom Bildfühler, und dadurch, daß das Schriebblatt (2) ein biegsames Blatt ist, das dadurch bewegt werden kann, daß es im Walzenspalt zweier sich drehender Rollen (9, 13—1) abgelegt wird; und dadurch, daß der Bildfühler (20) fixiert ist.

2. Eine Kopiertafel nach Anspruch 1, dadurch gekennzeichnet, daß das biegsame Blatt (2) auf Plastikmaterial ist.

3. Eine Kopiertafel nach Anspruch 1 oder Anspruch 2, gekennzeichnet durch eine Einrichtung zum Auslöschen des auf dem Blatt (2) unter Verwendung einer auslöschbaren Tinte geschriebenen Musters durch Bestrahlen des Musters mit einem Lichtstrahl.

4. Eine Kopiertafel nach einem der vorhergehenden Ansprüche, gekennzeichnet durch ein hinter dem biegsamen Blatt (2) angeordnetes starres Trägerblatt (2a).

5. Eine Kopiertafel nach einem der vorhergehenden Ansprüche, dadurch gekennzeichnet, daß das biegsame Blatt (2) die Form einer Endlosschlaufe hat.

6. Eine Kopiertafel nach einem der vorhergehenden Ansprüche, gekennzeichnet durch eine Einrichtung (64, 66, 68) zum Übertragen des elektrischen Signals über eine Telefonleitung zu einem entfernten Anschluß.

7. Eine Kopiertafel nach einem der vorhergehenden Ansprüche, gekennzeichnet durch einen digitalen Speicher (72) zum Speichern des Musters, so daß nachfolgendes Drucken durch Auslesen des Speicherinhalts und durch Senden der ausgelesenen Signale an den Drucker (22) bewirkt werden kann.

8. Eine Kopiertafel nach einem der vorhergehenden Ansprüche, gekennzeichnet durch eine Lichtabschirmung (127) zwischen der Lampe (125) und dem Bildfühler (122), um ein direktes Anstrahlen des Bildfühlers durch die Lampe zu verhindern.

**Revendications**

1. Un porte-copie électronique comprenant une lampe (17) pour éclairer une portion allongée d'éléments à copier; un capteur d'images (20) monté par rapport aux éléments à copier pour fournir un signal électrique en réponse à la configuration dans la portion allongée qui est éclairée par la lampe; et un moyen (11—16) pour faire copier le mouvement relatif entre le capteur d'images et les éléments à copier pour balayer la configuration sur les éléments à copier; caractérisé en ce qu'il comprend également une feuille à écrire (2) sur laquelle une configuration, telle qu'une chaîne de caractères peut être écrite avec possibilité d'effacement; et une imprimante (22) pour imprimer la configuration balayée dans une taille réduite selon le signal électronique provenant du capteur d'images, en ce que la feuille à écrire (2) est une feuille souple qui peut être déplacée en la plaçant dans l'emprise de rouleaux rotatifs (9, 13—1); et en ce que le capteur d'images (20) est fixe.

2. Un porte-copie conforme à la revendication 1, caractérisé en ce que la feuille souple (2) est réalisée dans une matière plastique.

3. Un porte-copie conforme à la revendication 1 ou 2, caractérisé par un moyen pour effacer une configuration, écrite sur la feuille (2) en utilisant une encre effaçable, en éclairant la configuration avec un faisceau lumineux.

4. Un porte-copie conforme à l'une des revendications précédentes; caractérisé par une feuille support rigide (2a) montée derrière la feuille souple (2).

5. Un porte-copie conforme à l'une des revendications précédentes, caractérisé en ce que la feuille souple (25) est sous la forme d'un boucle sans fin.

6. Un porte-copie conforme à l'une des revendications précédentes, caractérisé par un moyen (64, 66, 68) pour transmettre le signal électrique à un terminal à distance via une ligne téléphonique.

7. Un porte-copie conforme à l'une des revendications précédentes, caractérisé par une mémoire numérique (72) pour mémoriser la configuration de sorte qu'une impression ultérieure peut être effectuée en extrayant le contenu de la mémoire et en dirigeant le signal d'extraction sur l'imprimante (22).

8. Un porte-copie conforme à l'une des revendications précédentes, caractérisé par un écran lumineux (127) entre la lampe (125) et le capteur d'images (122) pour éviter le rayonnement direct du capteur d'images par la lampe.

# Fig. 1

# Fig. 2

# Fig. 3

# Fig. 4

Fig. 5A

# Fig. 5B

(a) MOTOR

1 PAGE

(b) GATE

(c) LAMP(17)

(d)